**Europäisches Patentamt**

(19) **European Patent Office**

**Office européen des brevets**

(11) Veröffentlichungsnummer: **0 031 866**
**B1**

(12) **EUROPÄISCHE PATENTSCHRIFT**

(45) Veröffentlichungstag der Patentschrift:
**25.04.84**

(21) Anmeldenummer: **80100081.1**

(22) Anmeldetag: **08.01.80**

(51) Int. Cl.³: **B 21 D 53/08,** B 21 C 37/26,
F 28 F 1/36, H 05 B 3/50,
F 24 C 7/06

(54) Verfahren zur Herstellung einer Heizeinrichtung oder eines Wärmeaustauschelementes.

(43) Veröffentlichungstag der Anmeldung:
**15.07.81 Patentblatt 81/28**

(45) Bekanntmachung des Hinweises auf die Patenterteilung:
**25.04.84 Patentblatt 84/17**

(84) Benannte Vertragsstaaten:
**AT CH DE FR GB IT SE**

(56) Entgegenhaltungen:
**EP - A - 0 000 369**
**DE - A - 2 803 413**
**DE - A - 2 804 644**
**DE - A - 2 805 921**
**DE - C - 934 466**

(73) Patentinhaber: **ELPAG AG CHUR, Quaderstrasse 11,
CH-7001 Chur (CH)**

(72) Erfinder: **Bleckmann, Ingo, Dr. Dipl.-Ing.,
Ignaz-Rieder-Kai 11, A-5020 Saizburg (AT)**

(74) Vertreter: **Liedl, Gerhard et al, Patentanwälte Liedi, Nöth
Steinsdorfstrasse 21-22, D-8000 München 22 (DE)**

Verfahren zur Herstellung einer Heizeinrichtung oder eines Wärmeaustauschelementes

Die Erfindung betrifft ein Verfahren zur Herstellung einer Heizeinrichtung oder eines Wärmeaustauschelementes, bestehend aus einem Rohr, welches eine elektrische Widerstandsheizung enthält oder welches ein flüssiges oder gasförmiges Wärmeaustauschmedium führt und aus einem Tragblech oder einem anderen Halteelement, auf das die Wärme geleitet oder von dem die Wärme entzogen wird, wobei um das Rohr unter Vorspannung ein Draht wendelförmig gewickelt wird, dessen Materialhärte größer ist als die Materialhärte des Rohres und das so hergestellte Zwischenprodukt auf das Tragblech aufgepreßt wird, dessen Materialhärte geringer ist als diejenige des Rohres und diejenige des Drahtes, wobei beim Aufpressen die in das Tragblech eindringenden Wendelkuppen von dem Material des Tragbleches unter Erzielung einer entsprechenden Verankerung umflossen werden.

Verfahren zur Herstellung von Heizeinrichtungen oder Wärmeaustauschelementen sind aus der DE-A 1-2 804 644 bekannt geworden.

Elektrische Heizeinrichtungen mit Rohrheizkörpern werden in zunehmendem Maße in Kunststoffgehäuse eingebaut, vor allem bei Haushaltsgeräten wie Kaffeemaschinen, Geschirrspülmaschinen, Waschmaschinen usw. Durch Zusammenwirken mehrerer ungünstiger Bedingungen kann es nun vorkommen, daß ein Rohrheizkörper nach außen, d. h. von der Heizwendel zum Rohrheizkörpermantel, durchbrennt und daß unter der Lichtbogenbildung glühende Partikel vom Rohrheizkörpermantel abschmelzen. Wenn diese z. B. auf den Boden des Kunststoffgehäuses fallen, kann sich dieses entzünden. Durch das Ausbrennen des Gerätes kann ein Zimmerbrand oder größerer Schaden entstehen. Obgleich dieses Ereignis selten ist und z. B. bei über 1 Million Geräte nur einmal auftritt, zwingt die Schadenshöhe zu entsprechenden Schutzmaßnahmen. Eine derartige Maßnahme kann beispielsweise darin bestehen, daß ein rinnenförmiges Blech an der Unterseite des Rohrheizkörpers befestigt wird. Die Rinne des Bleches fängt dann abgesprühte Metallteilchen auf. Da derartige Bleche wiederum durch Lötung oder Schweißung verbunden werden müssen, entstehen erhebliche Kosten. Abgesehen von derartigen Schutzmaßnahmen möchte man die Wärmeabstrahlung des Rohrheizkörpers in der dem Tragblech entgegengesetzten Richtung möglichst reduzieren und auf das Tragblech zurückleiten. Auch in diesem Fall ist es günstig, wenn das Mantelrohr des Rohrheizkörpers oder das das Wärmeaustauschmedium führende Rohr an seiner dem Tragblech abgewandten Seite mit einer schutzrinnenartigen Umhüllung versehen wird.

Der Erfindung liegt nun die Aufgabe zugrunde, das bekannte Verfahren so weiterzuentwickeln, daß an der dem Tragblech abgewendeten Seite eine den Rohrmantel teilweise umhüllende Umkleidung gebildet wird, die bei Durchschmelzen des Rohrheizkörpermantels abgesprühte Partikelchen auffängt oder durch die abgestrahlte Wärme in Richtung auf das Tragblech zurückgeführt wird. Die Lösung dieser Aufgabe ergibt sich aus den kennzeichnenden Merkmalen des Hauptanspruches. Die Unteransprüche 2 und 3 beschreiben bevorzugte Ausführungsformen.

Die Zeichnungen dienen zusammen mit der nachfolgenden speziellen Beschreibung der weiteren Erläuterung der Erfindung. Es zeigen:

Fig. 1 eine schaubildliche Ansicht zur Erläuterung der Herstellung eines mit einer Drahtwendel versehenen Rohres;

Fig. 2 eine Seitenansicht des mit einer Drahtwendel versehenen Rohres;

Fig. 3 und 4 einen Schnitt bzw. eine Seitenansicht eines Preßwerkzeuges vor dem Aufpressen des Rohres auf ein Tragblech;

Fig. 5 und 6 ähnlich wie die Fig. 3 und 4 das Preßwerkzeug am Ende des Preßvorganges;

Fig. 7 eine Schnittansicht eines Preßwerkzeuges, mit dem abschnittsweise ein mit einer Drahtwendel versehenes Rohr auf ein Tragblech aufgepreßt wird;

Fig. 8 in vergrößertem Maßstab einen Teilschnitt des fertigen Produktes;

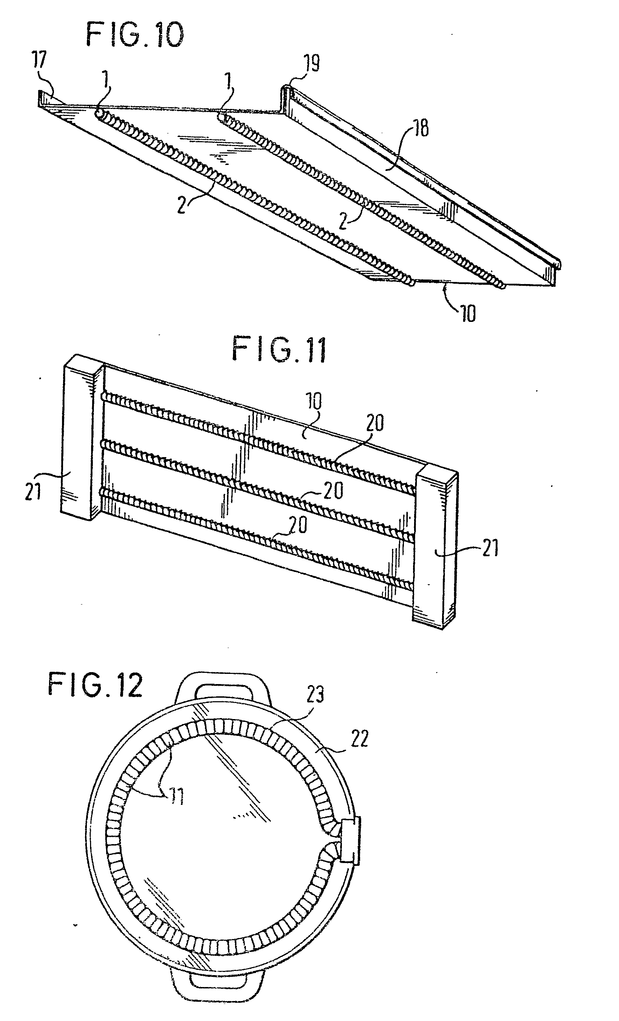

Fig. 9 eine schaubildliche Teilansicht des fertigen Produktes;

Fig. 10 eine schaubildliche Ansicht eines Wärmeaustauschelementes für ein Solardach;

Fig. 11 eine schaubildliche Ansicht eines Paneelheizkörpers für die Raumbeheizung;

Fig. 12 eine Unteransicht einer elektrisch beheizten Fritteuse.

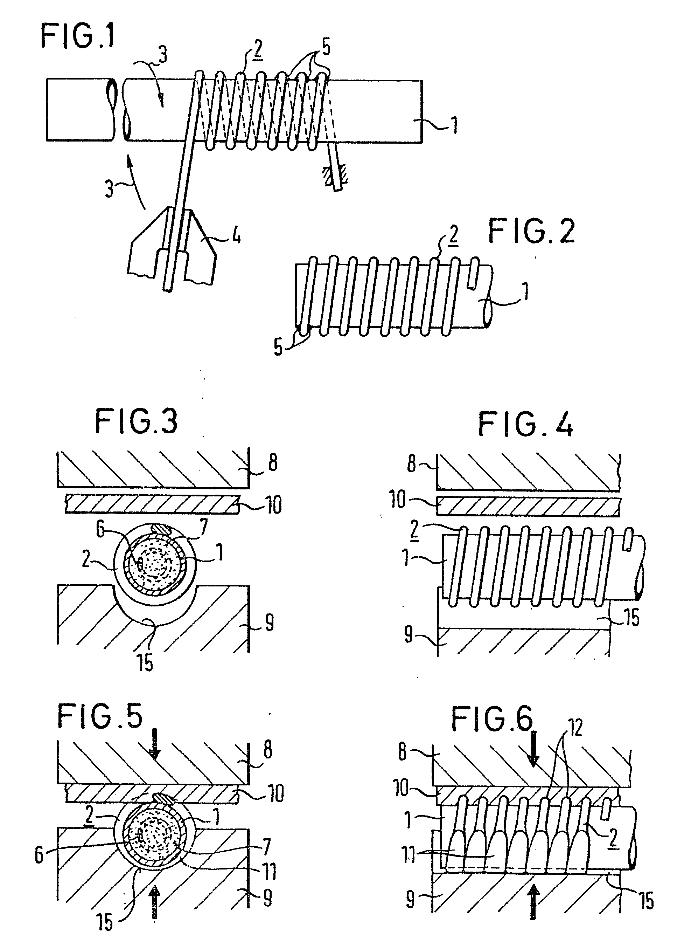

Auf ein Rohr 1 wird, wie in Fig. 1 dargestellt, ein Draht 2 mittels einer in Richtung der Pfeile 3 um die Achse des Rohres 1 rotierenden Wickeleinrichtung 4 wendelförmig mit entsprechender Spannung aufgewickelt. Mittels einer nicht dargestellten Schweißeinrichtung werden einige wenige Wendelwicklungen, vorzugsweise drei Wicklungen, durch punktförmige Schweißstellen 5 mit dem Rohrmantel verbunden. Die nächste nicht dargestellte Schweißstelle 5 wird dann in einem Abstand angebracht, welcher der Länge des herzustellenden Rohrstückes entspricht. Die im kontinuierlichen Durchlauf hergestellten und mit der Drahtwendel versehenen Rohrstücke werden dann durch eine ebenfalls nicht dargestellte Abtrenneinrichtung jeweils in der Mitte der Schweißstellen 5 abgetrennt. Es entstehen dann Rohrstücke, bei welchen an den Stirnenden jeweils die Drahtwendel mit dem Mantel des Rohres 1 verschweißt ist. Zwischen den Schweißstellen 5 jedoch ist die Wendel frei, d. h. lediglich unter Vorspannung auf den Rohrmantel aufgewickelt.

In das Rohr kann vor oder nach dem Aufwickeln der Wendel eine Heizwendel 6 aus elektrischem Widerstandsdraht eingebracht werden, welche in eine elektrische Isoliermasse 7 eingebettet ist.

Der auf diese Weise hergestellte Rohrheizkörper kann nun, wie in den Fig. 3 bis 6 dargestellt ist, mittels Preßwerkzeugen 8 und 9 an einem Tragblech 10 befestigt werden. Dabei sollen die dem Tragblech 10 abgewendeten Wicklungsabschnitte des Drahtes 2 flachgepreßt werden, wie dies bei 11 dargestellt ist. Um den beabsichtigten Zweck zu erreichen, sind mehrere Voraussetzungen erforderlich:

Die Materialhärte des Drahtes 2 muß größer sein, vorzugsweise 4 bis 6 mal so groß sein als die Materialhärte des Tragbleches 10. Aus diesem Grund besteht vorzugsweise die Platte oder das Tragblech 10 aus Aluminium oder einer Aluminiumlegierung oder aus Kupfer.

Die Steigung der Drahtwendel darf im Verhältnis zum Durchmesser des Drahtes nicht zu groß sein. Der Abstand der Mittelachsen der Drahtwicklungen voneinander soll etwa dem 2- bis 5fachen des Drahtdurchmessers, vorzugsweise jedoch dem 3fachen des Drahtdurchmessers entsprechen.

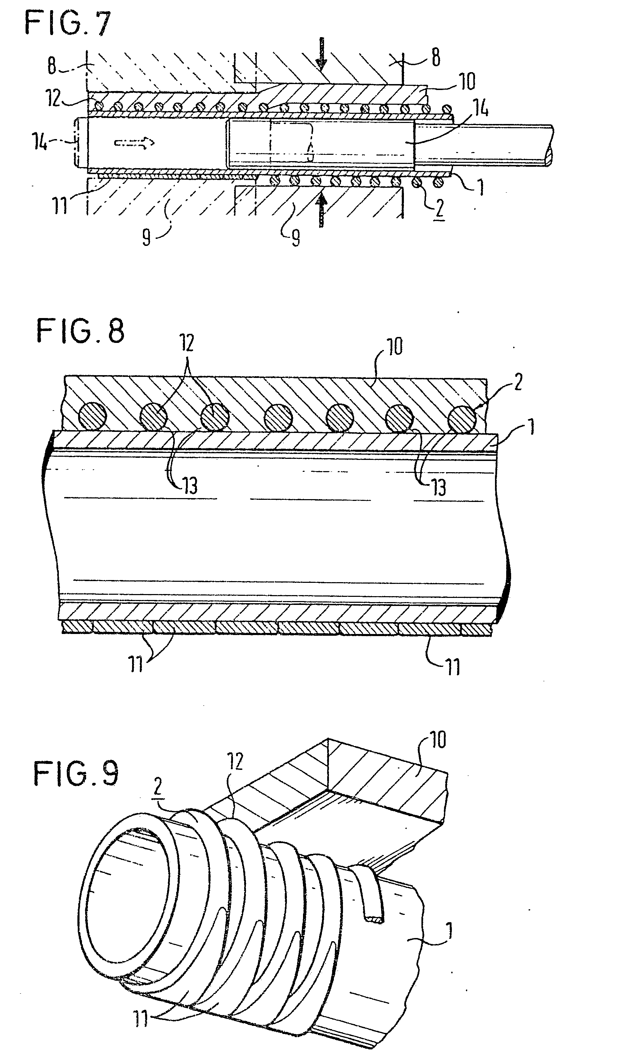

Unter diesen Voraussetzungen dringen bei dem Preßvorgang die an den Tragblechen anliegenden Kuppen 12 der Drahtwendel in das Material der Platte oder des Tragbleches 10 ein, wobei durch den beim Eindringen zunehmenden Durchmesser in der Kuppe 12 das Material parallel zur Achse des Rohres 1 verdrängt und damit jeweils in die Hinterschneidungen 13 (Fig. 8) der benachbarten Drahtwendelkuppen hineingedrückt wird.

Die Praxis zeigt dabei, daß die Hinterschneidungen 13 völlig ausgefüllt werden, wenn die angegebenen Voraussetzungen vorliegen, so daß sich dementsprechend die Kuppen 12 der Drahtwendel in dem Material der Platte oder des Tragbleches 10 verankern. Ein besonderer Vorteil ergibt sich dabei aus dem Umstand, daß der Draht 2 nur unter Vorspannung auf dem Rohr 1 aufgewickelt ist, jedoch mit diesem nicht durch Lötung oder Schweißung, abgesehen von den Schweißstellen 5 an dem Rohrende, verbunden ist. Die Wendelwicklungen des Drahtes 2 können sich dementsprechend bei dem Preßvorgang auf dem Rohr 1 etwas verschieben, wodurch Druckunterschiede ausgeglichen werden. Wenn also eine Hinterschneidung 13 an einer Seite einer Wendelkuppe 12 bereits mit Material ausgefüllt ist, die Hinterschneidung auf der gegenüberliegenden Seite derselben Wendelkuppe jedoch nicht vollständig ausgefüllt ist, dann wird die Wendelkuppe in Richtung auf die noch nicht ausgefüllte Hinterschneidung etwas verschoben, so daß sich auch diese ausfüllt. Die Wendelkuppe kann bei dem Preßvorgang also um geringe Beträge hin und her pendeln, bis sämtliche Hinterschneidungen sich ausgefüllt haben.

Da nunmehr die Wendelkuppen 12 ortsfest in der Platte oder dem Tragblech 10 verankert sind, gleichen sich Wärmespannungen dadurch aus, daß sich das Rohr 1 in der Drahtwendel verschiebt. Die Praxis zeigt, daß z. B. bei einem Rohrheizkörper, auf den eine Drahtwendel aufgelötet ist und der durch das angegebene Kaltverbindungsverfahren an dem Boden einer Bratpfanne oder Fritteuse befestigt ist, die beim Abschrecken des Bratgutes auftretenden Wärmespannungen dazu führen, daß im Laufe der Zeit sich die Wendelkuppen 12 aus ihrer Verankerung herausarbeiten. Dieser nachteilige Effekt kann nicht auftreten, wenn wie vorgeschlagen, die Drahtwendel nur an den Enden des Rohres durch eine Schweißung befestigt ist, ansonsten aber auf dem Rohr verschiebbar bleibt.

Eine weitere Bedingung ist, daß das Material des Rohres 1 härter ist als die Materialhärte des Drahtes 2. Wenn diese Voraussetzung erfüllt ist, dann werden die Wendelwicklungen nach Eindringen der Wendelkuppen 12 flachgedrückt, wie dies bei 11 dargestellt ist, und zwar bis sich die Ränder der flachgepreßten bandförmigen Teile berühren. Auf diese Art und Weise entsteht eine Art »Schutzhülle« für den Rohrheizkörper, der verschiedene Funktionen zukommen:

Die Wärmeabstrahlung des Rohrheizkörpers wird im Vergleich zu einem ungeschützten Rohrheizkörper etwa halbiert. Der Draht 2 dient also als Wärmeübertragungsmittel, d. h. die von der der Platte 10 abgewendeten Seite des Rohrheizkörpers abgestrahlte Wärme fließt zum erheblichen Teil über die eingebetteten Wendelkuppen 12 in die Platte 10 oder das Tragblech.

Bei Verwendung von Gehäusen oder Behältern aus Kunststoff besteht erhebliche Brandgefahr, wenn ein Rohrheizkörper ungeschützt in dem Behälter oder Gehäuse untergebracht ist. Durch generelle Überhitzung, z. B. beim Versagen einer Thermostateinrichtung oder durch örtliche Überhitzung, kann der Mantel des Rohrheizkörpers eine Temperatur annehmen, bei der schmelzflüssiges Material abgesprüht wird. Dasselbe gilt beim Durchbrennen eines Rohrheizkörpers nach außen, d. h. wenn sich ein Lichtbogen zwischen der Heizwendel 6 und dem Mantel des Rohres 1 bildet. Die flachgepreßten Teile 11 der Wendelwicklungen wirken nun wie ein Schutzrohr, d. h. sie fangen das Material auf bzw. verhindern eine Überhitzung des Kunststoffgefäßes oder des Kunststoffbehälters durch Wärmeabstrahlung. Es können dementsprechend die bisher üblichen Schutzbleche entfallen, wodurch sich eine bei Massenartikeln beachtliche Preiseinsparung ergibt, vor allem, wenn man bedenkt, daß die Schutzbleche z. B. durch Löten oder Schweißen an der Platte oder dem Tragblech 10 wiederum befestigt werden müssen.

Der Effekt des besseren Wärmeüberganges ist ebenfalls von großer Bedeutung in denjenigen Fällen, in denen ein flüssiges oder gasförmiges Wärmeaustauschmedium durch das Rohr 1 strömt, z. B. bei Wärmeaustauschern für Solaranlagen, Verdampfereinrichtungen für Kühlanlagen usw. Damit in denjenigen Fällen, in denen das Rohr 1 nicht gefüllt wird, sondern zur Führung eines gasförmigen oder flüssigen Wärmeaustauschmediums bestimmt ist, es nicht verdrückt wird, wird wie in Fig. 7 dargestellt, ein Innendorn 14 in das Rohr 1 eingeführt. Das Auspressen des mit einer Drahtwendel versehenen Rohres auf ein Tragblech o. dgl. kann abschnittsweise erfolgen, wobei das Rohr zusammen mit dem Innendorn jeweils nach Beendigung des Preßvorganges um einen Abschnitt weitergerückt wird und der Innendorn 14 dann um denselben Abschnitt zurückgeführt wird.

In denjenigen Fällen, wo aus anderen Gründen die Materialabstimmung im kalten Zustand nicht wie beschrieben möglich ist, dann durch Erwärmen eines der Teile, z. B. des Tragbleches 10, kurz vor dem Pressen eine entsprechende Materialabstimmung erzielt werden.

Die Preßwerkzeuge 8, 9 werden der besonderen Aufgabenstellung angepaßt. Das Preßwerkzeug 9 besitzt eine im Querschnitt halbkreisförmige Vertiefung 15, in die das mit der Drahtwendel 2 versehene Rohr 1 eingelegt wird. Die Vertiefung 15 sorgt dafür, daß die Wicklungen des Drahtes 11 über einen größeren Bereich des Rohrumfanges flachgedrückt werden, so daß also sozusagen ein »Halbrohr« aus Draht gebildet wird.

## Patentansprüche:

1. Verfahren zur Herstellung einer Heizeinrichtung oder eines Wärmeaustauschelementes, bestehend aus einem Rohr (1), welches eine elektrische Widerstandsheizung (6) enthält oder welches ein flüssiges oder gasförmiges Wärmeaustauschmedium führt und aus einem Tragblech (10) oder einem anderen Halteelement, auf das die Wärme geleitet oder von dem die Wärme entzogen wird, wobei um das Rohr (1) unter Vorspannung ein Draht (2) wendelförmig gewickelt wird, dessen Materialhärte größer ist als die Materialhärte des Rohres (1) und das so hergestellte Zwischenprodukt auf das Tragblech (10) aufgepreßt wird, dessen Materialhärte geringer ist als diejenige des Rohres (1) und diejenige des Drahtes (2) wobei beim Aufpressen die in das Tragblech (10) eindringenden Wendelkuppen (12) von dem Material des Tragbleches (10) unter Erzielung einer entsprechenden Verankerung (13) umflossen werden, dadurch gekennzeichnet, daß die Steigung der Drahtwendel im Verhältnis zum Durchmesser des Drahtes (2) so gewählt wird, daß der Abstand der Mittelachsen der Drahtwicklungen voneinander dem 2- bis 5fachen des Drahtdurchmessers entspricht, und daß die Gesenkform und der Druck der Presse so gewählt werden, daß die dem Tragblech (10) abgewendeten Drahtwendelwicklungen (11) bis zur gegenseitigen Berührung flachgedrückt werden, wodurch ein einen Teil des Rohrumfanges umgreifendes Gebilde erzeugt wird, das als Schutzrinne und als Teilumkleidung des Rohres (1) dient.

2. Verfahren nach Anspruch 1, dadurch gekennzeichnet, daß der Abstand der Mittelachsen der Drahtwicklungen voneinander dem Dreifachen des Drahtdurchmessers entspricht.

3. Verfahren nach Ansprüchen 1 und 2, dadurch gekennzeichnet, daß jeweils etwa drei Wendelwicklungen des Drahtes (2) mit dem Rohrmantel (1) verschweißt werden und daß beim Abtrennen der entsprechenden Rohrlänge der Schnitt durch die Schweißstelle (5) geführt wird, so daß jeweils der Draht (2) nur an den Stirnenden mit dem Rohr (1) durch die Schweißstellen (5) verbunden ist.

## Claims

1. A method for manufacturing a heating device or a heat-exchange element consisting of a tube (1) containing an electric resistance-heater or carrying a liquid or gaseous heat-exchange medium, and a supporting sheet (10) or other retaining element, to which the heat is conducted or from which the heat is withdrawn, wherein a pre-stressed wire (2), having a material hardness greater than the material hardness of the tube (1), is helically wound around the tube (1) and the thus produced intermediate product is pressed onto the support sheet (10) having a material hardness smaller than that of the tube (1) and that of the wire (2), wherein, during the pressing-on operation, the material of the support sheet (10) flows around the apices (12) of the helical windings penetrateing into the support sheet (10) to achieve a suitable anchorage (13), characterized in that the pitch of the wire helix is chosen in relation to the diameter of the wire (2) so that the spacings between the middle axes of the wire windings are two to five times the diameter of the wire, and that the and pressure of the press are chosen so that the helical wire windings (11) facing away from the support sheet (10) are pressed flat until they contact each other, whereby a structure is produced, emoracing a portion of the tube periphery and serving as a protective channel and as a partial covering of the tube (1).

2. A method according to claim 1, characterized in that the spacings between the middle axes of the wire windings are three times the wire diameter.

3. A method according to claims 1 and 2, characterized in that about three helical windings of the wire (2) are welded at a time to the tube (1), and that, in cutting a suitable tube length, the cut is made through the welding points (5), so that in each case the wire (2) is joined to the tube (1) only at the end faces thereof by the welding points (5).

## Revendications

1. Procédé de fabrication d'un dispositif de chauffage ou d'un élément d'échange thermique, composé d'un tube (1), comportant un chauffage électrique par résistance (6) ou véhiculant un fluide d'échange thermique liquide ou gazeux, et d'une tôle support (10) ou d'un autre élément de retenue, sur lesquels est dirigée la chaleur où dont elle est extraite, le tube (1) recevant un fil (2) précontraint enroulé en spirale, dont le matériau présente une dureté supérieure à celle du tube (1), et le produit intermédiaire ainsi constitué étant emmanché par pression sur la tôle support (10), dont le matériau présente une dureté inférieure à celles du tube (1) et du fil (2), les sommets (12) des spires pénétrant par compression dans la tôle support (10) étant enrobés dans le matériau de cette même tôle (10), permettant ainsi d'obtenir un ancrage (13) correspondant, caractérisé en ce que le choix de l'inclinaison des spires par rapport au diamètre du fil (2) est tel, que l'écartement des lignes médianes de ces spires est de 2 à 5 fois plus élevé que le diamètre du fil, et en ce que la forme de la matrice et la pression de la presse sont telles, que les spires (11) opposées à la tôle support (10) sont aplaties jusqu'à entrer au contact les unes des autres, permettant ainsi d'obtenir un produit qui enveloppe une partie de la circonférence du tube et sert de goulotte de protection et de revêtement partiel pour ce même tube (1).

2. Procédé selon la revendication 1, caractérisé en ce que l'écartement des lignes médianes des spires équivaut au triple du diamètre du fil.

3. Procédé selon les revendications 1 et 2, caractérisé en ce que trois spires environ du fil (2) sont soudées à la gaine du tube (1), et en ce que le tube est sectionné à la longueur correspondante au niveau du point de soudure (5), le fil (2) n'étant donc assemblé par les points (5) au tube (1) qu'aux seules extrémités frontales de ce dernier.

FIG.1

FIG.2

FIG.3

FIG.4

FIG.5

FIG.6

## FIG.7

## FIG.8

## FIG.9

FIG.10

FIG.11

FIG.12